Europäisches Patentamt

European Patent Office

Office européen des brevets

(11) Publication number: **0 119 782**
A1

# EUROPEAN PATENT APPLICATION

(21) Application number: **84301446.5**

(51) Int. Cl.³: **F 16 L 43/00, F 16 L 27/00**

(22) Date of filing: **05.03.84**

(30) Priority: **11.03.83 GB 8306788**
**08.12.83 GB 8332722**

(71) Applicant: **Camp, Douglas Charles Peter John, "Ashenden" 2 Merrow Road, Cheam Surrey (GB)**

(43) Date of publication of application: **26.09.84**
**Bulletin 84/39**

(72) Inventor: **MacIntyre, Hugh Melville Gordon, 41 Falkland Road, London NW5 2PU (GB)**

(84) Designated Contracting States: **AT DE FR GB IT NL**

(74) Representative: **MATTHEWS HADDAN & CO, Haddan House 33 Elmfield Road, Bromley, Kent BR1 1SU (GB)**

(54) **Variable angle pipe joint.**

(57) An intermediate pipe joint member (10) which comprises a hollow element having a spigot-like formation (20) at a first end (12) and a socket-like formation (22) at its other, second end (16), the spigot-like (20) and socket-like formations (22) defining polar axes (18; 14) set at an angle to one another. The spigot-like formation (20) is constituted by a rim portion of the first end (12) and the socket-like formation (22) at the second end (16) defines an annular recess (24) complementary to the rim portion (20) and wherein the rim portion (20) of a further, similar pipe joint member is receivable. The invention extends to a variable angle joint which includes a first hollow element (42) and a second hollow element (44) having an end tubular portion and an end coupling portion, the tubular portion and coupling portions defining polar axes which are set at an angle to one another; and a pipe joint member (10) as above-described. The coupling portion of the first element (42) defines a rim portion complementary to the annular recess (24) of the pipe joint member (10), and the coupling portion of the second element (44) defines an annular recess complementary to the rim portion of the member (10).

TITLE:   VARIABLE ANGLE PIPE JOINT

THIS INVENTION relates to a variable angle joint.

An object of the invention is to provide a means whereby two pipes may be connected together with their respective axes inclined to one another at any one of a range of angles.

According to the invention there is provided an intermediate pipe joint member for a variable angle pipe joint, which member comprises a hollow element having a spigot-like formation at a first end which defines a polar axis, and a socket-like formation at its other, second end which also defines a polar axis that is at an angle to the axis of its first end, the spigot-like formation being receivable within the socket-like formation of a further, similar pipe joint member with the spigot-like formation being relatively rotatable within the socket-like formation of the further member, to determine the relative orientation of the respective axes thereof.

The spigot-like formation may define an external cylindrical surface and the socket-like formation may define an internal cylindrical surface such that when the spigot-like formation is received in the socket-like formation, the internal cylindrical surface of the socket-like formation engages the external cylindrical surface of the spigot-like formation.

Further, the spigot-like formation may define an external cylindrical surface and an internal cylindrical surface and the socket-like formation may define a pair of opposed internal cylindrical surfaces such that when the spigot-like formation is received in the socket-like formation, the internal cylindrical surfaces of the socket-like formation engage the external and internal cylindrical surfaces respectively of the spigot-like formation. Thus, in a preferred embodiment of the pipe-joint member, the spigot-like formation may be constituted by a rim portion at the first end thereof and the internal cylindrical surfaces of the socket like formation at the second end thereof may define an annular recess complementary to the rim portion.

It will be appreciated that the first end of the pipe joint member may define a plurality of spigot-like formations and the second end thereof may define a corresponding number of socket-like formations. For example, the first end of the member may comprise the rim portion and at least one other spigot-like formation similar to the rim portion but of smaller diameter and concentric therewith, and then the second end of the member may define a corresponding number of concentric annular recesses.

The spigot-like formation may taper towards its periphery. Then the internal cylindrical surfaces of the socket-like formation may be correspondingly inclined to one another.

The spigot-like formation may be a push fit into the socket-like formation.

The pipe joint member may be curved. Further, the axis of the socket-like formation and the axis of the spigot-like formation may be at an angle of 135° to one another.

The invention extends to a variable angle joint which includes

a first hollow element having an end tubular portion, which defines a polar axis for connection to a pipe, and an end coupling portion formed with a spigot-like formation at its other end, said spigot-like formation defining a polar axis set at an angle to the axis of said end tubular portion;

a second hollow element having an end tubular portion, which defines a polar axis for connection to a pipe, and an end coupling portion formed with a socket-like formation at its other end, said socket-like formation defining a polar axis set at an angle to the axis of said end tubular portion; and

an intermediate pipe joint member as hereinabove described.

The invention is now described by way of example with reference to the accompanying drawings in which

Figure 1 is a side view of an intermediate pipe-joint member according to the invention;

Figure 2 is a section through the pipe joint member of Figure 1;

Figure 3 is a first embodiment of a variable angle pipe joint which includes the pipe joint member of Figures 1 and 2; and

Figure 4 is a second embodiment of a variable angle pipe joint which includes two of the intermediate pipe joint members.

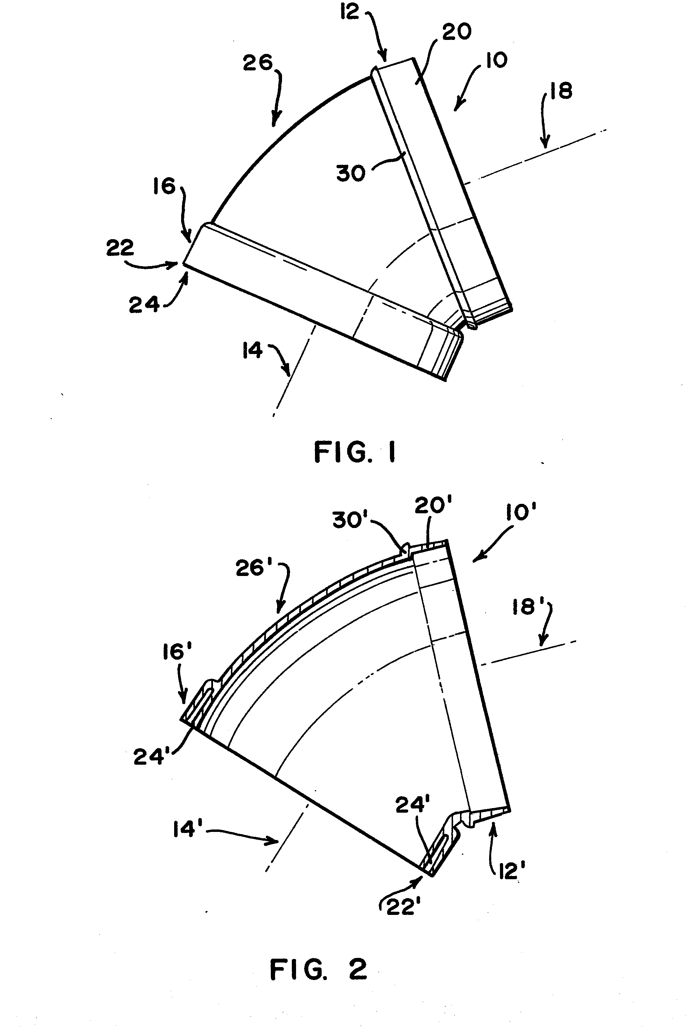

In Figures 1 and 2, reference numeral 10 generally indicates an intermediate pipe joint member according to the invention.

The pipe joint member 10 comprises a curved, tubular element having a first end portion 12 which defines a polar axis 18 and a second end portion 16 which defines a polar axis 14 that is at an angle of 135$^o$ to the axis 18.

The first end portion 12 defines a spigot-like formation in the form of a cylindrical rim portion 20 and the second end portion 16 defines a socket-like formation 22 having opposed internal cylindrical surfaces which define an annular recess 24 complementary to the rim portion 20. The rim portion 20 is receivable in the annular recess 24' of a further pipe joint member 10' similar to the member 10 such that the member 10 and the further member 10' are relatively rotatable to determine the relative orientation of the axes 14, 18'. The rim portion 20 of the member 10 is a push fit into the recess 24' of the further member 10'.

The respective diameters of the first end portion 12 and the second end portion 16 that defines the socket-like formation 22 are slightly larger than the remaining, intermediate portion 26 of the member 10.

The rim portion 20 is demarcated by a circumferential flange 30 which projects outwardly from the outer surface of the member 10 and serves to limit the extent to which the first end portion 12 of the member 10 is receivable into the second end portion 16' of the member 10'.

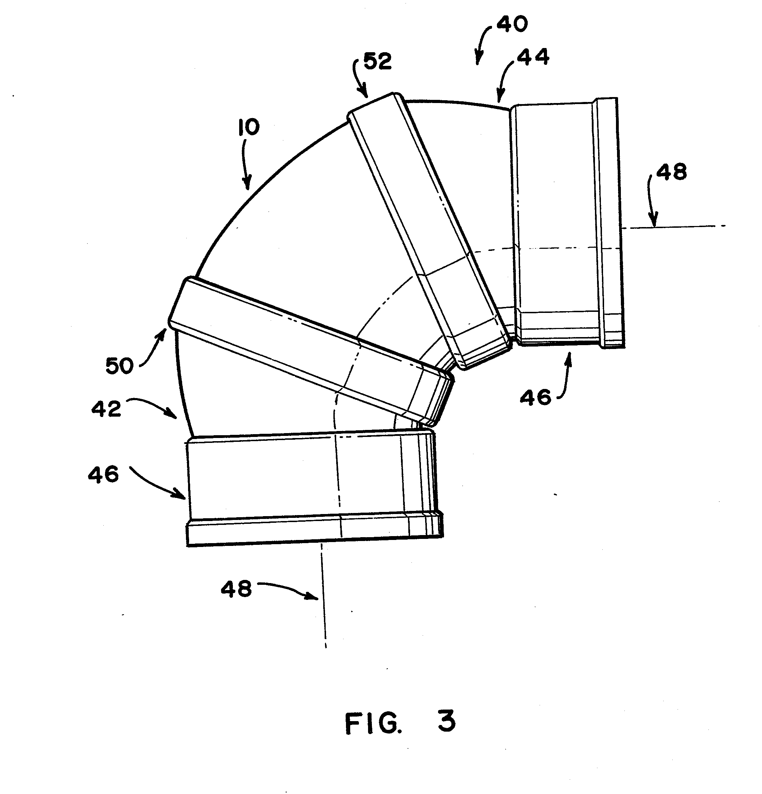

In Figure 3, reference numeral 40 generally indicates a first embodiment of a variable angle joint according to the invention.

The variable angle joint 40 includes a first curved, tubular element 42, a second curved, tubular element 44, and the intermediate pipe joint member 10 of Figures 1 and 2 described above.

Each of the first and second tubular elements 42, 44 is provided with a straight end portion 46 which defines a polar axis 48 and is connectable with an end portion of a pipe to which the joint 40 is to be fitted.

The other end 50 of the first element 42 is similar to the first end 12 of the pipe joint member 10 and defines a polar axis that is at an angle of about 160° to its associated axis 48. The other end 52 of the second element 44 is similar to the second end 16 of the member 10, and defines a polar axis that is at an angle of 160° to its associated axis 48.

In use, the end 50 of the first element 42 is connected to the second end 16 of the member 10, the rim portion of the first element 42 being located in the annular recess 24 of the member 10, and the end 52 of the second element 44 is connected to the first end 12 of the member 10, the rim portion 20 of the member 10 being located in the annular recess of the second element 44. The end portions of two pipes to be joined (not shown) are connected to the first and second elements 42 and 44 via the respective straight end portions 46. Before and/or after so connecting the said two pipe portions, the first and second elements 42, 44 are rotated relative to the intermediate member 10 to provide a required angle between the pipe portions.

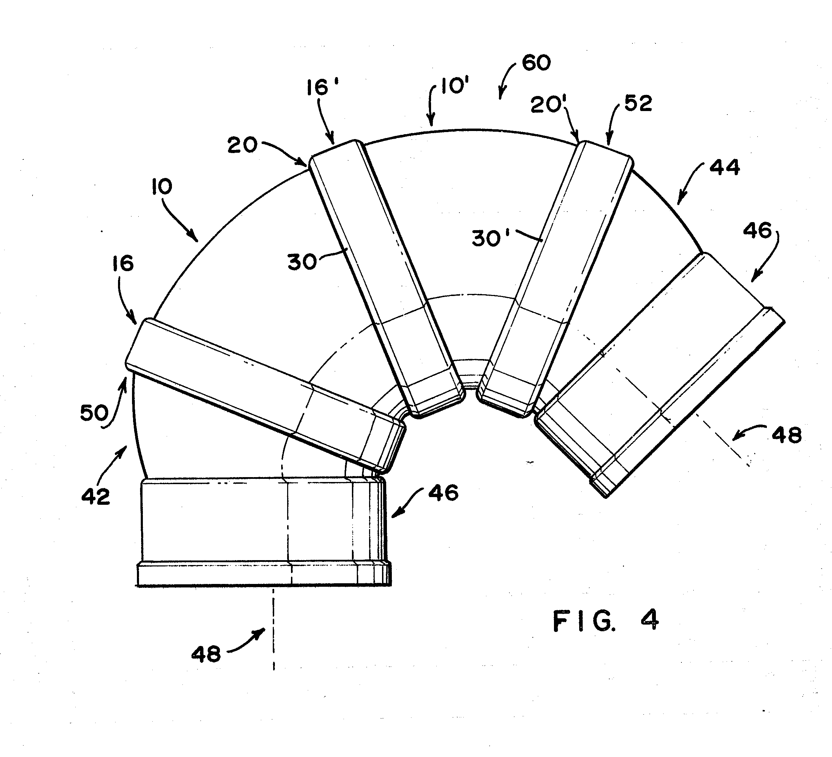

In Figure 4, reference numeral 60 generally indicates a second embodiment of a variable angle pipe joint according to the invention.

The joint 60 includes the first and second elements 42, 44 of Figure 3 as above-described and the intermediate pipe joint member 10 of Figures 1 to 3 as above-described. Further, the joint 60 of Figure 4 includes the further pipe joint member 10' similar to the pipe joint member 10.

In use, the joint 60 is assembled as described above for the joint 40, except that the pipe joint member 10' is located between the member 10 and the second element 44, with the rim portion 20 of the member 10 located in the annular recess 24' of the member 10', and the rim portion 20' of the member 10' located in the annular recess of the second element 44. The elements 42, 44 and the members 10, 10' are relatively rotated to provide a required angle between the pipe portions.

CLAIMS

1.      An intermediate pipe joint member for a variable angle pipe joint, which member comprises a hollow
element having a spigot-like formation at a first end
which defines a polar axis, and a socket-like formation
at its other, second end which also defines a polar axis
that is at an angle to the axis of its first end, the
spigot-like formation being receivable within the
socket-like formation of a further, similar pipe joint
member with the spigot-like formation being relatively
rotatable within the socket-like formation of the further member, to determine the relative orientation of
the respective axes thereof.

2.      A pipe joint member as claimed in Claim 1,
wherein the spigot-like formation defines an external
cylindrical surface and the socket-like formation defines an internal cylindrical surface such that when the
spigot-like formation is received in the socket-like
formation, the internal cylindrical surface of the
socket-like formation engages the external cylindrical
surface of the spigot-like formation.

3. A pipe joint member as claimed in Claim 1 or Claim 2 wherein the spigot-like formation defines an external cylindrical surface and an internal cylindrical surface and the socket-like formation defines a pair of opposed internal cylindrical surfaces such that when the spigot-like formation is received in the socket-like formation, the internal cylindrical surfaces of the socket-like formation engage the external and internal cylindrical surfaces respectively of the spigot-like formation.

4. A pipe joint member as claimed in Claim 3 wherein the spigot-like formation tapers towards its periphery.

5. A pipe joint member as claimed in Claim 3 or Claim 4, wherein the spigot-like formation is a push fit into the socket-like formation.

6. A pipe joint member as claimed in any one of the preceding claims wherein the axis of the socket-like formation and the axis of the spigot-like formation are at an angle of $135^{\circ}$ to one another.

7.        A pipe joint member substantially as herein described and illustrated.

8.        A variable angle pipe joint which includes a first hollow element having an end tubular portion, which defines a polar axis for connection to a pipe, and an end coupling portion formed with a spigot-like formation at its other end, said spigot-like formation defining a polar axis set at an angle to the axis of said end tubular portion;

a second hollow element having an end tubular portion, which defines a polar axis for connection to a pipe, and an end coupling portion formed with a socket-like formation at its other end, said socket-like formation defining a polar axis set at an angle to the axis of said end tubular portion; and

an intermediate pipe joint member as claimed in any one of Claims 1 to 7.

FIG. 1

FIG. 2

FIG. 3

FIG. 4

0119782

European Patent Office

**EUROPEAN SEARCH REPORT**

Application number

| | **DOCUMENTS CONSIDERED TO BE RELEVANT** | | EP 84301446.5 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X | <u>DE - A - 2 335 929</u> (INTECO) <br> * Fig. 5 * | 1,2,7, 8 | F 16 L 43/00 <br> F 16 L 27/00 |
| X | <u>GB - A - 1 604 235</u> (J.S. PERESS) <br> * Totality * | 1,2,3, 6 | |
| A | <u>DE - A - 2 229 983</u> (PICOLI) <br> * Fig. 1-4 * | 1,2,7, 8 | |
| P,A | <u>GB - A - 2 116 278</u> (BEARCAT) <br> * Totality * | 1,2,6 | |
| | ---- | | |
| | | | **TECHNICAL FIELDS SEARCHED (Int. Cl. ³)** <br><br> F 16 L 27/00 <br> F 16 L 43/00 |

The present search report has been drawn up for all claims

| Place of search | Date of completion of the search | Examiner |
|---|---|---|
| VIENNA | 03-05-1984 | SCHUGANICH |